# EUROPEAN PATENT APPLICATION

(11) **EP 1 445 937 A2**
(43) Date of publication of application: **11.08.2004**
(21) Application number: 04250617.0
(22) Date of filing: 05.02.2004
(51) Int. Cl.: H04N 1/053

(54) **Laser printing apparatus**

(30) Priority: 30.05.2003 KR 2003034948; 05.02.2003 KR 2003007277
(71) Applicant: Samsung Electronics Co., Ltd., Suwon-si, Gyeonggi-do 442-742 (KR)
(72) Inventor: Chang, Goo-soo, Yongin-si, Gyeonggi-do (KR); Gong, Jung-tag, Suwon-si, Gyeonggi-do (KR)
(74) Representative: Geary, Stuart Lloyd

(57) **Abstract**

A scanning line alignment compensation apparatus and method for a laser printer. The scanning line alignment compensation apparatus includes a laser scanning unit (200) (LSU) having a first laser diode (210-1) and a second laser diode (210-2) and at least one sync signal detection sensor (209) that generates a sync signal based on at least one of the first laser diode (210-1) and the second laser diode (210-2) based on selectively driving either of the first laser diode (210-1) and the second laser diode (210-2), and generates at least one offset sync signal having first and second sensor detection periods based on the sync signal generated based on the at least one of the first laser diode and the second laser diode; a compensation unit (300) compensating for first and second video data input in synchronization with a video clock based on the first and second sensor detection periods; and a laser diode control unit (100) outputting control signals to control the first laser diode (210-1) and the second laser diode (210-2) based on the compensated first and second video data.

## Description

The present invention relates to a laser printing apparatus comprising first and second lasers, scanning means for scanning the laser beams from the lasers across a photoelectric member, control means for modulating the lasers beams in dependence on alternate lines of an image signal, and beam detecting means for detecting the beams at predetermined positions during scanning thereof by the scanning means.

Laser printers are widely available and, due to the development of laser printer technology, two-line optical scanning-type laser printers have been widely adopted, rather than one-line optical scanning-type laser printers.

Two-line optical scanning-type laser printers have much greater print speeds than one-line optical scanning-type laser printers. In the case of two-line optical scanning-type laser printers, however, two laser diodes are required in order to scan two lines at a time, which means that there is a positional difference between the respective laser diodes. This causes an error to be produced in the vertical alignment of the two lines, although the print speed is improved.

A laser printing apparatus according to the present invention is characterised in that the control mean means is configured to determine the scan delay between the first and second light beams in dependence on the output of the beam detecting means and delaying the modulation of one of the laser beams with respect to the modulation of the other in dependence on said scan delay such that the starts of the image lines on the photoelectric member are in alignment. Thus, the vertical error between the scanning lines generated due to the positional difference between the two laser diodes in the two-line optical scanning type laser printer can be compensated for.

Preferably, the beam detecting means is configured to detect the beams at the start of each scan.

Preferably, the beam detecting means comprises a single sensor located to detect both beams.

Preferably, the control means is configured to determine said delay by, enabling both laser beams for a scan such that both are detected by the sensor during the scan, enabling only one laser beam for a scan such that only the enabled laser beam is detected by the sensor during the scan, determining the difference between the durations of the outputs of the sensor during said scans.

Preferably, the control means is configured to determine said delay by:
(a) enabling both laser beams for scanning such that both are detected by the beam detecting means;
(b) subsequently enabling only the first laser beam for scanning such that it is detected by the detecting means;
(c) determining the period between the starts of the beam detection outputs of the beam detection means resulting from steps (a) and (b);
(d) enabling both laser beams for scanning such that both are detected by the beam detecting means;
(e) subsequently enabling only the second laser beam for scanning such that it is detected by the detecting means;
(f) determining the period between the starts of the beam detection outputs of the beam detection means resulting from steps (d) and (e);
(g) determining the difference between the periods determined in steps (c) and (f).

More preferably, steps (a) and (b) are performed in the same scan period and steps (d) and (e) are performed in the same scan period.

More preferably, steps (a) and (b) are performed in successive scans and steps (d) and (e) are performed in successive scan periods.

Embodiments of the present invention will now be described, by way of example, with reference to the accompanying drawings, in which:
Figure 1 is a block diagram of a first embodiment and a second embodiment of a scanning-line alignment compensation apparatus for a laser printer according to the present invention;
Figure 2 is a block diagram of a compensation unit of the scanning line alignment compensation apparatus of Figure 1;
Figure 3 is a perspective view of a first embodiment of a laser scanning unit (LSU) according to the present invention;
Figure 4A is a timing diagram illustrating the calculation of a (1-1)-th offset value by means of the LSU shown in Figure 3;
Figure 4B is a timing diagram illustrating the calculation of a (1-2)-th offset value by means of the LSU shown in Figure 3;
Figure 5 is a timing diagram illustrating the calculation of a second offset value by means of the LSU shown in Figure 3;
Figure 6 is a timing diagram illustrating the compensation of first and second video data using the first offset value shown in Figures 4A and 4B, and the second offset value shown in Figure 5;
Figure 7 is a perspective view of a second embodiment of a laser scanning unit (LSU) according to the present invention;
Figure 8 is a timing diagram illustrating the calculation of a (1-1)-th and a (1-2)-th offset value by means of the LSU shown in Figure 7;
Figure 9A is a timing diagram illustrating an alternative method for calculating a (1-1)-th offset value by means of the LSU shown in Figure 7;
Figure 9B is a timing diagram illustrating an alternative method for calculating a (1-2)-th offset value by means of the LSU shown in Figure 7;
Figure 10 is a timing diagram illustrating the calculation of a second offset value by means of the LSU shown in Figure 7;
Figure 11 is a timing diagram illustrating the compensation of first and second video data using the first offset value shown in Figure 8 or in Figures 9A and 9B, and the second offset value shown in Figure 10 ; and
Figure 12 is a flowchart illustrating first and second embodiments of a scanning-line alignment compensation method for a laser printer according to the present invention.

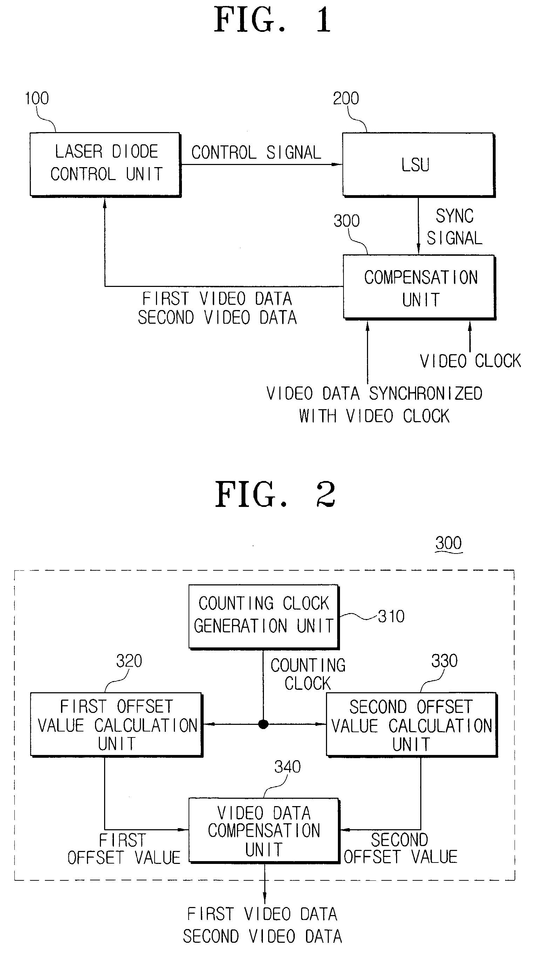

Referring to Figure 1, the scanning-line alignment compensation apparatus of Figure 1 comprises a laser diode control unit 100, a LSU 200 and a compensation unit 300.

The laser diode control unit 100 receives first and second video data that are compensated by first and second offset values from the compensation unit 300, and outputs control signals for controlling the first and second laser diodes 210-1, 210-2 of the LSU 200 in response to the compensated first and second video data.

The LSU 200 is a laser scanning device, and comprises the first and second laser diodes 210-1, 210-2, horizontal synchronising mirrors 208-1, 208-2 and first and second sync signal detection sensors 209-1, 209-2.

The first and second laser diodes 210-1, 210-2 are controlled by control signals output from the laser diode control unit 100. The first and second sync signal detection sensors 209-1, 209-2 generate sync signals in response to detecting the light beams output from the first and second laser diodes 210-1, 210-2. The resulting sync signals are output to the compensation unit 300.

Referring to Figure 2, the compensation unit 300 comprises a clock unit (or counting clock generation unit) 310, a first offset value calculation unit 320, a second offset value calculation unit 330 and a video data compensation unit 340.

The clock unit 310 outputs a clock signal (or counting clock) using an inverter. However, the clock unit 310 may use a ring oscillator clock. The output of the clock signal, by means of the clock unit 310 using the inverter, is well known in the art, and a detailed explanation thereof will be omitted.

The first offset value calculation unit 320 uses the clock signal to calculate a first offset value, which is based on the positional difference between the first and second laser diodes 210-1, 210-2.

The second offset value calculation unit 330 uses the clock signal to calculate a second offset value, which is the difference between a pulse period of a sync signal generated in response to the detection of a light beam from the first laser diode 210-1 and a video clock.

The video data compensation unit 340 receives the first and second offset values, and compensates the first and second video data. The compensated first and second video data are output to the laser diode control unit 100.

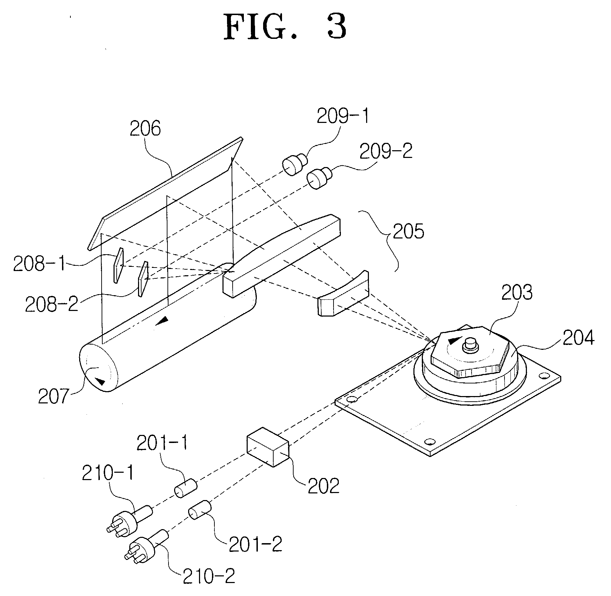

Referring to Figure 3, the LSU 200 will now be explained in detail.

The LSU 200 comprises the first and second laser diodes 210-1, 210-2, collimator lenses 201-1, 201-2, a cylinder lens 202, a polygonal mirror 203, a motor 204, an f*θ* lens 205, the horizontal synchronous mirrors 208-1, 208-2 and the first and second sync signal detection sensors (or beam detecting means) 209-1, 209-2.

The first and second laser diodes 210-1, 210-2 are light sources and are controlled the control signals output from the laser diode control unit 100.

The collimator lenses 201-1, 201-2 convert the light beams emitted from the laser diodes 210-1, 210-2 into parallel light. The cylinder lens 202 converts the beams of parallel light from the collimator lenses 201-1, 201-2 into linear light beams in a horizontal direction with respect to a sub-scanning direction. Furthermore, the polygonal mirror 203, which is driven at a constant speed by the motor 204, rotates and scans the linear light beams in the horizontal direction from the cylinder lens 202 at a constant line speed. The f*θ* lens 205 has a constant refractive index with respect to an optical axis, and refracts the light beams, which are reflected from the polygonal mirror 203, in a main scanning direction. Also, the f*θ* lens 205 compensates for an aberration of the light beams reflected from the polygonal mirror 203 to focus the reflected light beams on a scanning surface. A reflective mirror 206 reflects the light beams passing through the f*θ* lens 205 in a specified direction to make the reflected light beams incident on the surface of a photoreceptor drum (or photosensitive drum or photoelectric member) 207 that is an image-forming surface.

The horizontal synchronising mirrors 208-1, 208-2 reflect the light beams passing through the f*θ* lens 205 in the horizontal direction (i.e. towards the synchronisation signal detection sensors 209-1, 209-2). In the embodiment of the present invention shown in Figure 3, two horizontal synchronising mirrors 208-1, 208-2 are provided.

The first and second synchronisation signal detection sensors 209-1, 209-2 respectively receive the light beams reflected from the horizontal synchronising mirrors 208-1, 208-2. The sync signals output from the first and second sync signal detection sensors 209-1, 209-2 are used to synchronise the scanning of the light beams from the first and second laser diodes 210-1, 210-2. In the embodiment of the present invention shown in Figure 3, two sync signal detection sensors are provided (i.e. a first sync signal detection sensor 209-1, and a second sync signal detection sensor 209-2), corresponding respectively to the two horizontal synchronising mirrors 208-1, 208-2.

In the LSU 200, a scanning-line is formed when a light beam is reflected from a surface of the polygonal mirror 203 as it rotates, such that the light beam is incident on the photoreceptor drum 207 in a main scanning direction. Also, another scanning-line, corresponding to video data, is formed in a sub-scanning direction, that is perpendicular to the main scanning direction, on the photoreceptor drum 207.

The light beams reflected from the horizontal synchronising mirrors 208-1, 208-2 are respectively detected by the first and second sync signal detection sensors 209-1, 209-2, and are then synchronized with each other, such that the scanning start positions of the respective scanning-lines are kept constant, and an image is formed with a small scanning-line deviation.

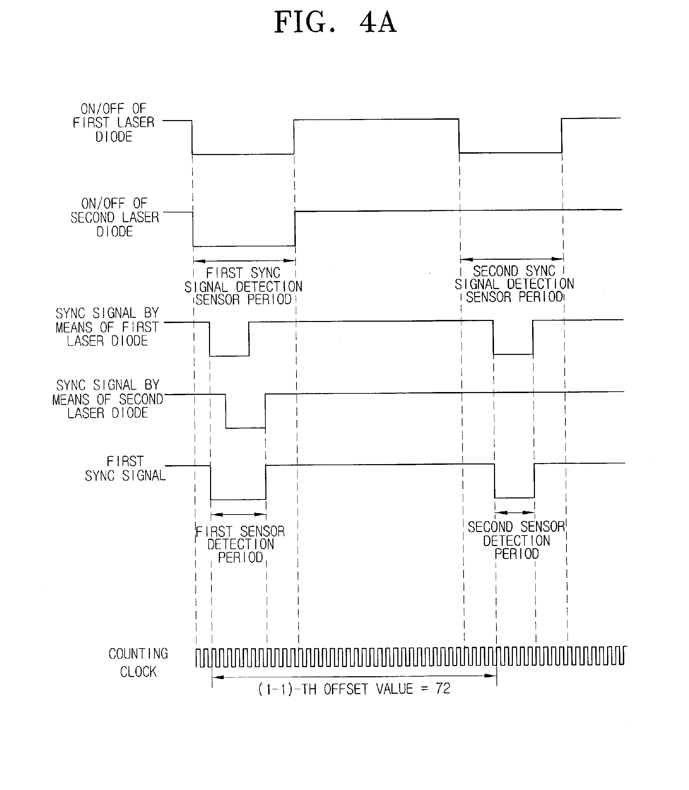

Referring to Figure 4A, the first laser diode 210-1 is turned on/off to perform the alignment compensation, and the second laser diode 210-2 is also turned on/off to perform the alignment compensation. When the first and second laser diodes 210-1, 210-2 are turned on, respective light beams are emitted from the first and second diodes 210-1, 210-2.

To compensate for the vertical alignment error of the scanning-lines, the on/off operations of the first and second laser diodes 210-1, 210-2 are controlled. A first control period, corresponding to the first sync signal detection sensor 209-1, is defined as a first sync signal detection sensor period, and a second control period, corresponding to the second sync signal detection sensor 209-2, is defined as a second sync signal detection sensor period.

A sync signal is generated in response to the detection of a light beam from the first laser diode 210-1 by means of the first and/or the second sync signal detection sensors 209-1 and 209-2 in dependence on whether the first laser diode 210-1 is driven in the first and/or the second sync signal detection sensor period. A sync signal is generated in response to the detection of a light beam from the second laser diode 210-2 by means of the first and/or the second sync signal detection sensors 209-1 and 209-2 in dependence on whether the second laser diode 210-1 is driven in the first and/or the second sync signal detection sensor period

A first composite sync signal (or first sync signal) is calculated based on the respective sync signals generated in response to the light beams emitted from the first and second laser diodes 210-1, 210-2. The respective composite sync signals described hereinafter are obtained from the sync signals that are generated in response to the light beams emitted from the first and second laser diodes 210-1, 210-2 by using OR gates.

The first (or preceding) period of the pulse, detected by the first sync signal detection sensor 209-1, is defined as a first sensor detection period, and the following period of the pulse, detected by the second sync signal detection sensor 209-2, is defined as a second sensor detection period, based on the light beams emitted from the first and second laser diodes 210-1, 210-2.

As shown in Figure 4A, to compensate for the positions of the first and second laser diodes 210-1, 210-2, sync signals generated in response to the detection of the light beams from the first and second laser diodes 210-1, 210-2 are generated when the first and second laser diodes 210-1, 210-2 are driven in the first sync signal detection sensor period. Also, the first composite sync signal, detected during the first sync signal detection sensor period, forms the first sensor detection period.

In the second sync signal detection sensor period, the sync signals generated in response to the detection of the light beams from the first and second laser diodes 210-1, 210-2 are generated when the first laser diode 210-1 is driven and the second laser diode 210-2 is not driven. Also, the first composite sync signal, detected during the second sync signal detection sensor period, forms the second sensor detection period.

Then, the section between the start point of the first sensor detection period and the start point of the second sensor detection period is counted using the clock signal generated by the clock unit 310. The counted value is defined as a (1-1)-th offset value. In the embodiment of the present invention shown in Figure 4A, the (1-1)-th offset value is 72.

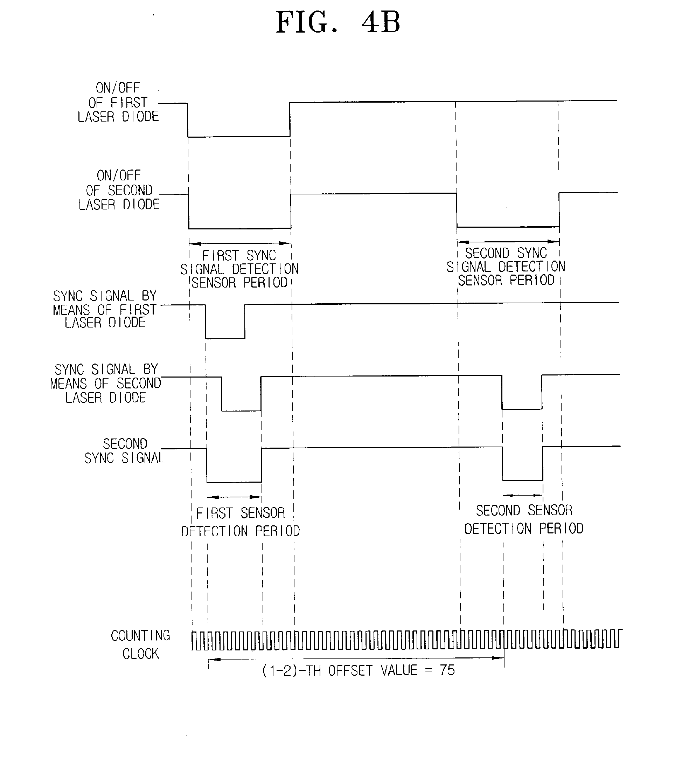

Referring to Figure 4B, the calculation of the second composite sync signal is similar to the calculation of the first composite sync signal as shown in Figure 4A. However, the calculation of the second composite sync signal differs from the calculation of the first composite sync signal in that in the second sync signal detection sensor period, the sync signals generated using the first and second laser diodes 210-1, 210-2 are generated when the second laser diode 210-2 is driven and the first laser diode 210-1 is not driven. Also, the second sensor detection period is formed.

Then, the section between the start point of the first sensor detection period and the start point of the second sensor detection period is counted using the clock signal generated by the clock unit 310. The counted value is defined as a (1-2)-th offset value. In the embodiment of the present invention shown in Figure 4B, the (1-2)-th offset value is 75.

The difference between the (1-1)-th offset value and the (1-2)-th offset value, as calculated above, is defined as the first offset value. In the embodiment of the present invention shown in Figures 4A and 4B, the first offset value is 3.

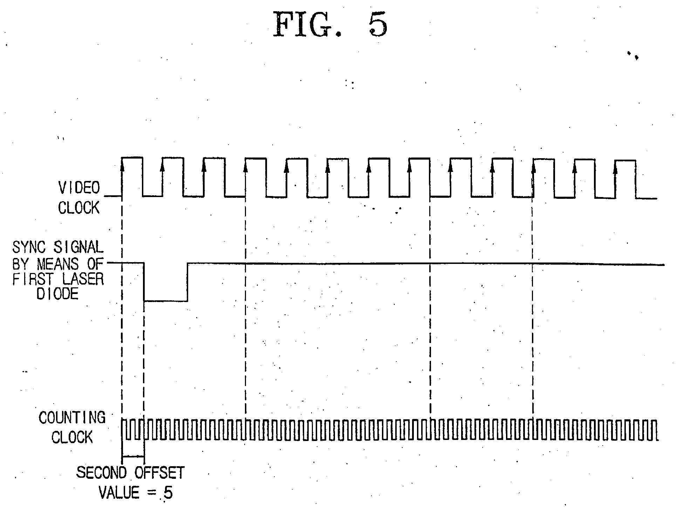

Referring to Figure 5, a video clock is output from a video clock unit (not illustrated), and is synchronized with the video data. Then, the video clock and the video data synchronized with the video clock are input to the compensation unit 300.

Then, the section between the start point of the video clock, as shown in Figure 5, and the start point of the pulse period in the sync signal generated using the first laser diode 210-1 as described above, is counted using the clock signal generated from the clock unit 310. This counted value is defined as the second offset value. In the embodiment of the present invention shown in Figure 5, the second offset value is 5.

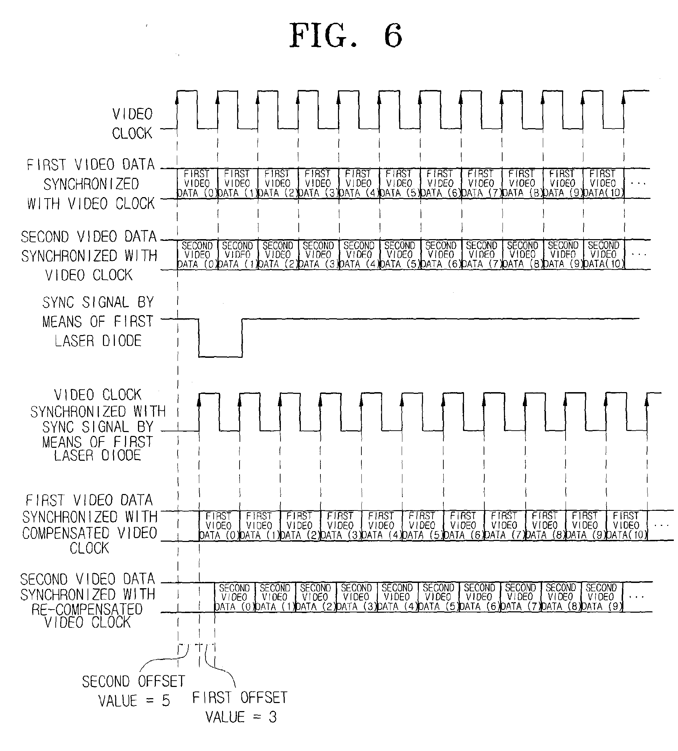

Referring to Figure 6, the operation of the scanning-line alignment compensation apparatus and the alignment compensation method according to the present invention will now be explained in greater detail.

Alignment compensation of the scanning-lines is performed before a printing operation starts, when the laser printer is operated by a user.

First, to generate the first composite sync signal, the light beams are output during the first sync signal detection sensor period by driving the first and second laser diodes 210-1, 210-2 in the LSU 200, and the first sensor detection period is detected using the first sync signal detection sensor 209-1, as described above. Then, in the second sync signal detection sensor period, which occurs after a specified time, a light beam is output by driving only the first laser diode 210-1, and the second sensor detection period is detected using the second sync signal detection sensor 209-2, as described above.

Then, to generate the second composite sync signal, the light beams are output in the first sync signal detection sensor period by driving the first and second laser diodes 210-1, 210-2, and the first sensor detection period is detected using the first sync signal detection sensor 209-1. Then, in the second sync signal detection sensor period, which occurs after a specified time, a light beam is output by driving only the second laser diode 210-2, and the second sensor detection period is detected using the second sync signal detection sensor 209-2, as described above.

Then, the first and second composite sync signals, which have second sensor detection periods that differ from each other, are output from the LSU 200 to the compensation unit 300, and the sync signal generated based on the light beam from the first laser diode 210-1 is output to the compensation unit 300.

The first offset value calculation unit 320 of the compensation unit 300, which receives the first and second composite sync signals, calculates the (1-1)-th offset value of 72 and the (1-2)-th offset value of 75 based on the first sensor detection period and the second sensor detection period in the first and second composite sync signals using the clock signal. Then, the first offset value calculation unit 320 calculates the first offset value of 3, and outputs the first offset value to the video data compensation unit 340.

Furthermore, the second offset value calculation unit 330, which receives the sync signal generated in response to light emitted from the first laser diode 210-1 and the video clock output from the video clock unit (not illustrated), calculates the second offset value of 5 based on the pulse period of the sync signal based on the first laser diode 210-1 and the video clock, and outputs the second offset value to the video data compensation unit 340.

The video data compensation unit 340 receives the first and second offset values, the video clock, and the first and second video data synchronized with the video clock.

Then, the video data compensation unit 340 compensates the video clock using the first and second offset values of 3 and 5, and compensates the first and second video data synchronized with the compensated video clock.

The compensation procedure will now be explained in detail. First, the video clock is delayed by the second offset value of 5. The first video data are then synchronized with the delayed video clock. That is, the input first video data are delayed by the second offset value of 5.

Then, the video clock, which has been delayed by the second offset value of 5, is delayed again by the first offset value of 3. The second video data are then synchronized with the video clock after it has been delayed again. That is, the input second video data are delayed by the first and second offset values of 3 and 5.

The compensated first and second video data are output to the laser diode control unit 100. The laser diode control unit 100 calculates a control signal based on the compensated first and second video data. The calculated control signal is transmitted to the LSU 200, to control the emission of light from the first and second laser diodes 210-1, 210-2. Accordingly, the vertical alignment error between the scanning lines due to the positional difference between the laser diodes 210-1, 210-2 is compensated for.

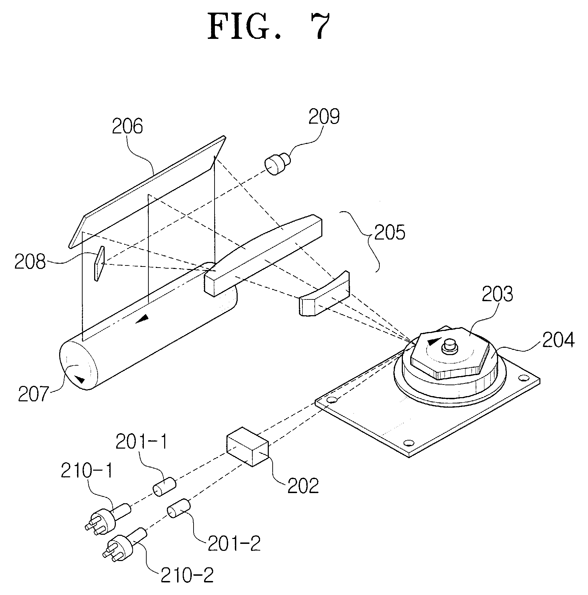

Referring to Figures 7, 8, 9A and 9B, differences between the second embodiment and the first embodiment shown in Figure 3 will now be explained.

In the first embodiment shown in Figure 3, two sync signal detection sensors 209-1, 209-2 are used, but the embodiment shown in Figure 7 uses only one sync signal detection sensor (or beam detection sensor) 209. Accordingly, only one horizontal synchronising mirror 208 is provided.

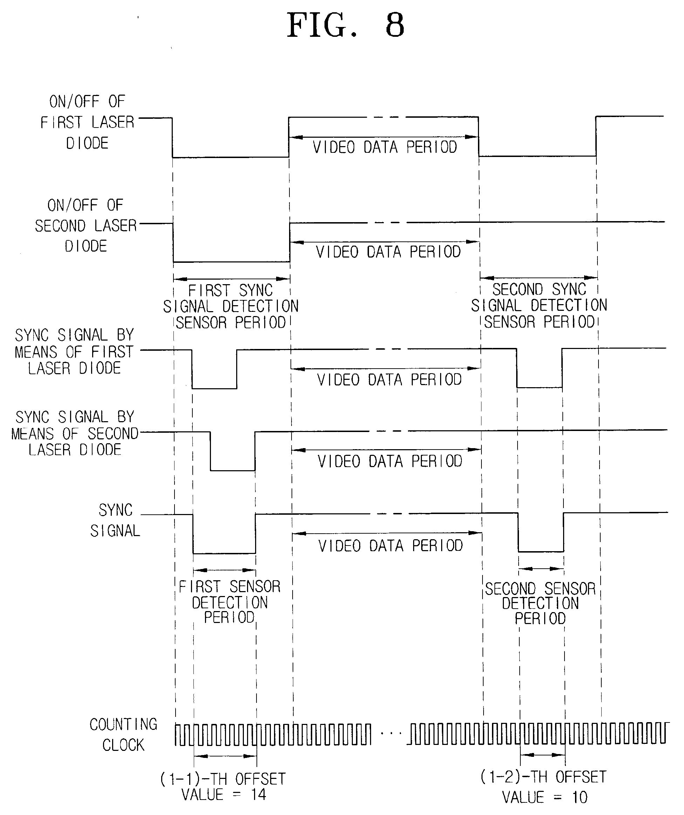

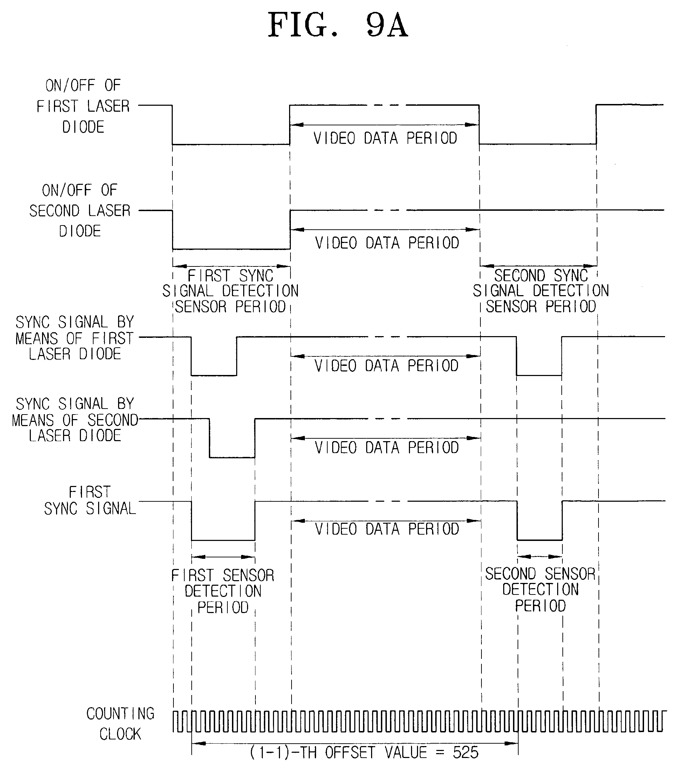

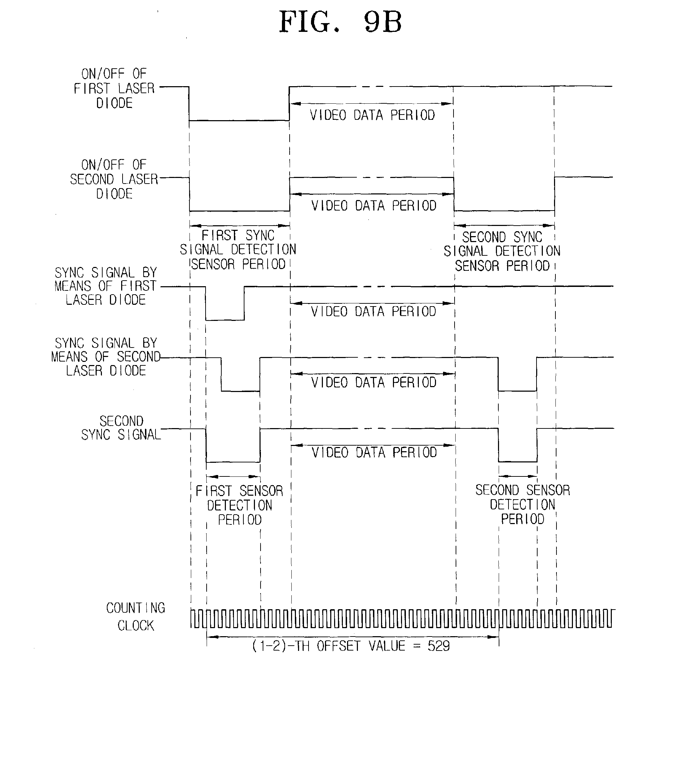

Also, in the embodiment shown in Figure 3, the first offset value is calculated by generating the first and second composite sync signals, but in the embodiment shown in Figure 7, the first offset value is calculated by generating only one composite sync signal as shown in Figure 8, or alternatively the first offset value is calculated by generating the first and second composite sync signals, as shown in Figures 9A and 9B.

Also, the first and second sync signal detection sensor periods in the embodiment shown in Figures 4A and 4B have different meanings from the first and second sync signal detection sensor periods in the embodiments shown in Figure 8 and in Figures 9A and 9B. That is, in Figures 4A and 4B, because two neighbouring sync signal detection sensors 209-1, 209-2 are provided, the first and second sync signal detection sensor periods are provided in the same scanning-line, and the first sync signal detection sensor period corresponds to the first sync signal detection sensor 209-1, while the second sync signal detection sensor period corresponds to the second sync signal detection sensor 209-2. However, in Figure 8 and in Figures 9A and 9B, because only one sync signal detection sensor 209 is provided, the first sync signal detection sensor period corresponds to the sync signal detection sensor 209 in a first (or preceding) scanning-line, and the second sync signal detection sensor period corresponds to the sync signal detection sensor 209 in the following line (i.e. the next line).

Referring to Figure 8, the offset value calculation will be explained. To correspond to Figures 4A and 4B, the video data period is simply illustrated, and the same procedures described with reference to Figures 4A and 4B will be omitted.

The first sync signal detection sensor period is a period for the sync signal detection sensor 209 in a first scanning-line, and the second sync signal detection sensor period is a period for the sync signal detection sensor 209 in the following line.

The sync signal generated using the first laser diode 210-1 is generated using the sync signal detection sensor 209 in response to the light beam emitted from the first laser diode 210-1. The sync signal generated using the second laser diode 210-2 is generated using the sync signal detection sensor 209 in response to the light beam emitted from the second laser diode 210-2.

As shown in Figure 8, to compensate for the positions of the first and second laser diodes 210-1, 210-2, sync signals generated using the first and second laser diodes 210-1, 210-2 are generated when the first and second laser diodes 210-1, 210-2 are respectively driven in the first sync signal detection sensor period. Also, the composite sync signal, which forms the first sensor detection period, is detected.

In the second sync signal detection sensor period, the sync signals generated using the first and second laser diodes 210-1, 210-2 are generated when the first laser diode 210-1 is driven and the second laser diode 210-2 is not driven. Also, the composite sync signal, which forms the second sensor detection period, is detected.

Then, the first sensor detection period is counted using the clock signal generated by the clock unit 310. The counted result is defined as a (1-1)-th offset value. In the example shown in Figure 8, the (1-1)-th offset value is 14.

Then, the second sensor detection period is counted using the clock signal generated by the clock unit 310. The counted result is defined as a (1-2)-th offset value. In the example shown in Figure 8, the (1-2)-th offset value is 10.

The difference between the (1-1)-th offset value and the (1-2)-th offset value as calculated above is defined as the first offset value. In the example shown in Figure 8, the first offset value is 4.

Referring to Figure 9A, to compensate for the positional difference between the first and second laser diodes 210-1, 210-2, sync signals generated using the first and second laser diodes 210-1, 210-2 are generated when the first and second laser diodes 210-1, 210-2 are driven in the first sync signal detection sensor period. Also, the first composite sync signal, which forms the first sensor detection period, is detected.

In the second sync signal detection sensor period, the sync signals generated using the first and second laser diodes 210-1, 210-2 are generated when the first laser diode 210-1 is driven and the second laser diode 210-2 is not driven. The first composite sync signal, which forms the second sensor detection period, is detected.

Then, the section between the start point of the first sensor detection period and the start point of the second sensor detection period is counted using the clock signal generated by the clock unit 310. The difference is defined as a (1-1)-th offset value. The (1-1)-th offset value is 525 in the example shown in Figure 9A.

Referring to Figure 9B, the calculation of the second composite sync signal is similar to the calculation of the first composite sync signal as shown in Figure 9A. However, the calculation of the second composite sync signal differs from the calculation of the first composite sync signal in that in the second sync signal detection sensor period, the sync signals generated using the first and second laser diodes 210-1, 210-2 are generated when the second laser diode 210-2 is driven and the first laser diode 210-1 is not driven. Then, the second sensor detection period is formed.

Then, the section between the start point of the first sensor detection period and the start point of the second sensor detection period is counted using the clock signal generated by the clock unit 310. The difference is defined as a (1-2)-th offset value. In the example shown in Figure 9B, the (1-2)-th offset value is 529.

The difference between the (1-1)-th offset value and the (1-2)-th offset value as calculated above is defined as the first offset value. In the example shown in Figures 9A and 9B, the first offset value is 4.

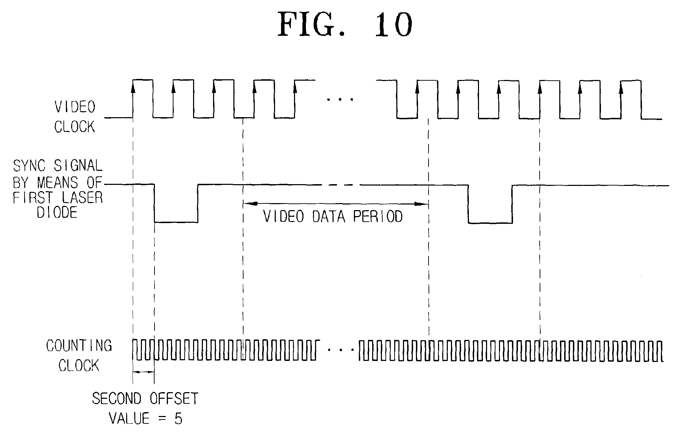

Referring to Figure 10, the section between the start point of the video clock and the start point of the first (or preceding) pulse period in the sync signal generated using the first laser diode 210-1 is counted using the clock signal generated by the clock unit 310. This counted value is defined as the second offset value. In the example shown in Figure 10, the second offset value is 5.

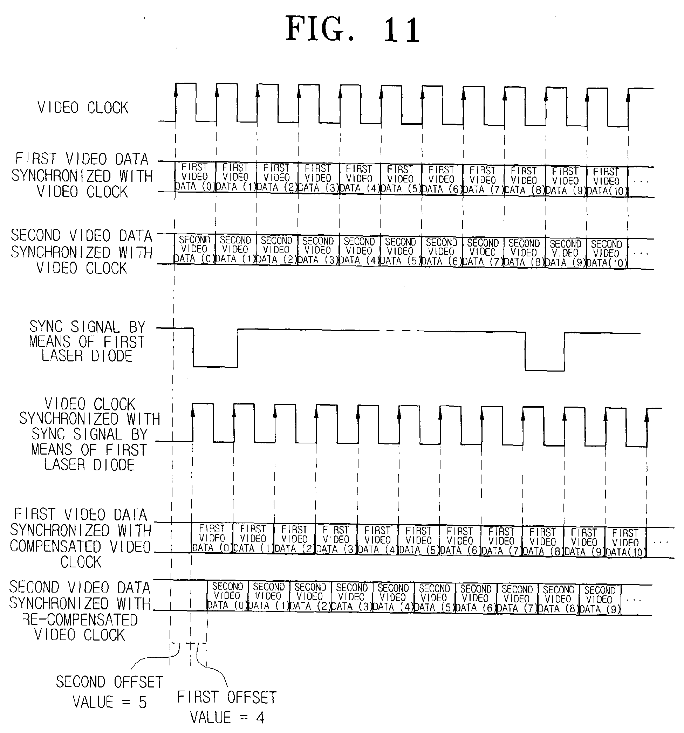

Referring to Figure 11, the operation of the second embodiment of the alignment compensation apparatus and the alignment compensation method according to the present invention will now be explained in detail.

First, referring to Figure 8, the composite sync signal having the first and second sensor detection periods is generated and output to the compensation unit 300. The first offset value calculation unit 320 of the compensation unit 300, which receives the composite sync signal, calculates the (1-1)-th offset value of 14 and the (1-2)-th offset value of 10 based on the first sensor detection period and the second sensor detection period in the composite sync signal using the clock signal. Then, the first offset value calculation unit 320 calculates the first offset value of 4, which is the difference between the (1-1)-th offset value and the (1-2)-th offset value, and outputs the first offset value to the video data compensation unit 340.

Alternatively, referring to Figures 9A and 9B, the first and second composite sync signals, which have different second sensor detection periods, are generated and output to the compensation unit 300. The first offset value calculation unit 320 of the compensation unit 300, which receives the first and second composite sync signals, calculates the (1-1)-th offset value of 525 and the (1-2)-th offset value of 529 based on the first sensor detection period and the second sensor detection period in the first and second composite sync signals using the clock signal. The first offset value calculation unit 320 calculates and outputs the first offset value of 4, which is the difference between the (1-1)-th offset value and the (1-2)-th offset value, to the video data compensation unit 340.

The calculation procedure for the second offset value and the procedure of compensating the first and second video data based on the first and second offset values are the same as those described with reference to Figure 6 and, therefore, the explanation thereof will be omitted.

Accordingly, the vertical alignment error between the two scanning-lines due to the positional difference between the first and second laser diodes 210-1, 210-2 is compensated for based on the compensated first and second video data.

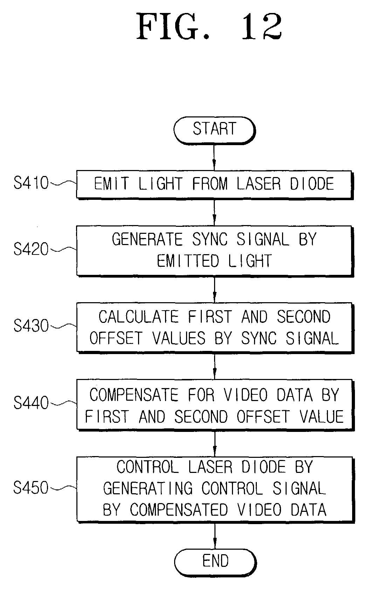

Referring to Figure 12, the alignment compensation method will now be explained.

First, the light beams are emitted from the first and second laser diodes 210-1, 210-2 in the LSU 200 (step S410). The light beams emitted from the first and second laser diodes 210-1, 210-2 are detected using the sync signal detection sensors 209, 209-1, 209-2 provided in the LSU 200 to generate the sync signals. As described above, one or two sync signals may be generated (step S420). The sync signals are input to the first and second offset value calculation units 320, 330 to calculate the first and second offset values. To calculate the second offset value, the video clock is also input to the second offset value calculation unit 330 (step S430). The calculated first and second offset values are input to the video data compensation unit 340, and the first and second video data are compensated for using the input first and second offset values. Specifically, the first video data is compensated by the second offset value, and the second video data is compensated by the first and second offset values (step S440). The compensated first and second video data are output to the laser diode control unit 100, and the laser diode control unit 100 outputs control signals, corresponding to the compensated first and second video data, to the LSU 200. The output control signals control the light emission from the first and second laser diodes 210-1, 210-2 of the LSU 200 (step S450).

As described above, a scanning-line alignment compensation apparatus and method, wherein the vertical error between the scanning-lines generated due to the positional difference between the two laser diodes in the two-line optical scanning laser printer can be compensated for is provided. Accordingly, the misalignment of printed lines, which is a problem occurring in two-line type laser printers, can be solved.

## Claims

1. A laser printing apparatus comprising, first and second lasers (210-1, 210-2), scanning means (203) for scanning the laser beams from the lasers (210-1, 210-2) across a photoelectric member (207), control means (100, 300) for modulating the lasers beams in dependence on alternate lines of an image signal, and beam detecting means for detecting the beams at predetermined positions during scanning thereof by the scanning means (203), **characterised in that** the control means (100, 300) is configured to determine the scan delay between the first and second light beams in dependence on the output of the beam detecting means and delaying the modulation of one of the laser beams with respect to the modulation of the other in dependence on said scan delay such that the starts of the image lines on the photoelectric member (207) are in alignment.

2. An apparatus according to claim 1, wherein the beam detecting means is configured to detect the beams at the start of each scan.

3. An apparatus according to claim 1 or 2, wherein the beam detecting means comprises a single sensor (209) located to detect both beams.

4. An apparatus according to claim 3, wherein the control means (100, 300) is configured to determine said delay by:
enabling both laser beams for a scan such that both are detected by the sensor (209) during the scan;
enabling only one laser beam for a scan such that only the enabled laser beam is detected by the sensor (209) during the scan;
determining the difference between the durations of the outputs of the sensor (209) during said scans.

5. An apparatus according to claim 1, 2 or 3, wherein the control means (100, 300) is configured to determine said delay by:
(a) enabling both laser beams for scanning such that both are detected by the beam detecting means;
(b) subsequently enabling only the first laser beam for scanning such that it is detected by the detecting means;
(c) determining the period between the starts of the beam detection outputs of the beam detection means resulting from steps (a) and (b);
(d) enabling both laser beams for scanning such that both are detected by the beam detecting means;
(e) subsequently enabling only the second laser beam for scanning such that it is detected by the detecting means;
(f) determining the period between the starts of the beam detection outputs of the beam detection means resulting from steps (d) and (e);
(g) determining the difference between the periods determined in steps (c) and (f).

6. An apparatus according to claim 5, wherein steps (a) and (b) are performed in the same scan period and steps (d) and (e) are performed in the same scan period.

7. An apparatus according to claim 5, wherein steps (a) and (b) are performed in successive scans and steps (d) and (e) are performed in successive scan periods.

8. A scanning line alignment compensation apparatus for a laser printer, comprising:
a laser scanning unit (LSU) having a first laser diode and a second laser diode and at least one sync signal detection sensor that generates a sync signal based on at least one of the first laser diode and the second laser diode based on selectively driving either of the first laser diode and the second laser diode, and generates at least one offset sync signal having first and second sensor detection periods based on the sync signal generated based on the at least one of the first laser diode and the second laser diode;
a compensation unit compensating for first and second video data input in synchronization with a video clock based on the first and second sensor detection periods; and
a laser diode control unit outputting control signals to control the first laser diode and the second laser diode based on the compensated first and second video data.

9. The apparatus of claim 8, wherein the compensation unit comprises:
a counting clock generation unit generating a counting clock using an inverter;
a first offset value calculation unit using the counting clock to calculate a first offset value that is a difference between the first sensor detection period, which is based on driving both the first laser diode and the second laser diode, and the second sensor detection period, which is based on the selective driving of the first laser diode and the second laser diode;
a second offset value calculation unit using the counting clock to calculate a second offset value, which is a difference between the sync signal generated based on the at least one of the first laser diode and the second laser diode and the video clock; and
a video data compensation unit compensating for a delay of the first and second video data based on the first offset value and the second offset value.

10. The apparatus of claim 9, wherein the at least one sync signal detection sensor comprises two sync signal detection sensors, and the first offset value is calculated by
obtaining a (1-1)-th offset value by counting a difference between a start point of the first sensor detection period and a start point of the second sensor detection period, based on the driving of only the first laser diode, and
obtaining a (1-2)-th offset value by counting a difference between a start point of the first sensor detection period and a start point of the second sensor detection period, based on the driving of only the second laser diode .

11. The apparatus of claim 9, wherein the at least one sync signal detection sensor comprises one sync signal detection sensor, and the first offset value is calculated by
obtaining a (1-1)-th offset value by counting the first sensor detection period, and
obtaining a (1-2)-th offset value by counting the second sensor detection period, based on driving either of the first laser diode and the second laser diode .

12. The apparatus of claim 9, wherein the at least one sync signal detection sensor comprises one sync signal detection sensor, and the first offset value is calculated by
obtaining a (1-1)-th offset value by counting a difference between a start point of the first sensor detection period and a start point of the second sensor detection period, based on the driving of only the first laser diode, and
obtaining a (1-2)-th offset value by counting a difference between a start point of the first sensor detection period and a start point of the second sensor detection period, based on the driving of only the second laser diode.

13. The apparatus of claim 9, wherein the first video data are compensated for based on compensating for the video clock by the second offset value, and the second video data are compensated for based on compensating for the video clock by the first offset value and the second offset value.

14. A scanning line alignment compensation method for a laser printer having a first laser diode and a second laser diode and at least one sync signal detection sensor that generates a sync signal based on at least one of the first laser diode and the second laser diode based on selectively driving either of the first laser diode and the second laser diode, and generates at least one offset sync signal having first and second sensor detection periods based on the sync signal generated based on the at least one of the first laser diode and the second laser diode, the method comprising:
generating the offset sync signal by the at least one sync signal detection sensor from a scanning light emitted from the first laser diode and the second laser diode;
compensating for first and second video data synchronized with a video clock based on the first and second sensor detection periods; and
outputting control signals to control the first laser diode and the second laser diode based on the compensated first and second video data.

15. The method of claim 14, wherein said compensating for first and second video data comprises:
calculating a first offset value, that is a difference between the first sensor detection period, which is based on driving both the first laser diode and the second laser diode and the second sensor detection period, which is based on the selective driving of the first laser diode and the second laser diode, based on a counting clock using an inverter;
calculating a second offset value, which is a difference between the sync signal generated based on the at least one of the first laser diode and the second laser diode and the video clock, based on the counting clock; and
compensating for a delay of the first and second video data based on the first offset value and the second offset value.

16. The method of claim 15, further comprising, when the at least one sync signal detection sensor comprises two sync signal detection sensors, calculating the first offset value by
obtaining a (1-1)-th offset value by counting a difference between a start point of the first sensor detection period and a start point of the second sensor detection period, based on the driving of only the first laser diode, and
obtaining a (1-2)-th offset value by counting a difference between a start point of the first sensor detection period and a start point of the second sensor detection period, based on the driving of only the second laser diode.

17. The method of claim 15, further comprising, when the at least one sync signal detection sensor comprises one sync signal detection sensor, calculating the first offset value by
obtaining a (1-1)-th offset value by counting the first sensor detection period, and
obtaining a (1-2)-th offset value by counting the second sensor detection period, based on driving either of the first laser diode and the second laser diode.

18. The method of claim 15, further comprising, when the at least one sync signal detection sensor comprises one sync signal detection sensor, calculating the first offset value by
obtaining a (1-1)-th offset value by counting a difference between a start point of the first sensor detection period and a start point of the second sensor detection period, based on the driving of only the first laser diode, and
obtaining a (1-2)-th offset value by counting a difference between a start point of the first sensor detection period and a start point of the second sensor detection period, based on the driving of only the second laser diode.

19. The method of claim 15, further comprising compensating for the first video data based on compensating for the video clock by the second offset value, and compensating for the second video data based on compensating for the video clock by the first offset value and the second offset value.

20. A scanning line alignment compensation apparatus for a laser printer, comprising:
a laser scanning unit having a first laser diode and a second laser diode, and generating a first sync signal and a second sync signal based respectively on light emitted by the first laser diode and the second laser diode, the first sync signal and the second sync signal respectively having a first sensor detection period and a second sensor detection period;
a compensation unit receiving video data and using the first sensor detection period and the second sensor detection period to compensate for the video data; and
a laser diode control unit controlling the first laser diode and the second laser diode based on the compensated for video data.

21. The apparatus of claim 20, wherein the laser scanning unit further comprises a first sync signal detection sensor and a second sync signal detection sensor corresponding respectively to the first laser diode and the second laser diode, the first sync signal detection sensor and the second sync signal detection sensor respectively generating a sync signal based on the first laser diode and a sync signal based on the second laser diode.

22. The apparatus of claim 21, wherein the compensation unit comprises:
a first offset value calculation unit receiving the first sync signal and the second sync signal and calculating a first offset value based on a positional difference between the first laser diode and the second laser diode;
a second offset value calculation unit receiving the sync signal based on the first laser diode and calculating a second offset value based on a difference between a pulse period of the sync signal based on the first laser diode and a video clock signal input to the compensation unit; and
a video data compensation unit receiving the first offset value and the second offset value and compensating for a vertical error between scanning lines generated due to a positional difference between the first laser diode and the second laser diode.

23. The apparatus of claim 22, wherein:
the first offset value is calculated by determining, for both the first sync signal and the second sync signal, a difference between a starting point of the first sensor detection period and a starting point of the second sensor detection period, and subtracting the two differences; and
the second offset value is calculated by determining a difference between a starting point of the sync signal generated based on the first laser diode and the video clock.

24. The apparatus of claim 22, wherein;
the video data comprise first video data and second video data;
the video data compensation unit compensates for the vertical error between scanning lines by delaying the first video data by the second offset value and delaying the second video data by both the first offset value and the second offset value; and
the laser diode control unit receives the compensated for first video data and second video data, generates a control signal based on the compensated for first video data and second video data, and sends the control signal to the laser scanning unit to adjust the light output from the first laser diode and the second laser diode.

25. The apparatus of claim 20, wherein:
the first sensor detection period of the first sync signal is generated by driving both the first laser diode and the second laser diode, and the second sensor detection period of the first sync signal is generated by driving only the first laser diode; and
the first sensor detection period of the second sync signal is generated by driving both the first laser diode and the second laser diode, and the second sensor detection period of the second sync signal is generated by driving only the second laser diode.
